# FASCICULE DE BREVET EUROPEEN

(11) **EP 0 849 512 B1**
(45) Date de publication et mention de la délivrance du brevet: **19.05.2004**
(21) Numéro de dépôt: 97402858.1
(22) Date de dépôt: 27.11.1997
(51) Int. Cl.: F16J 15/06, F16J 15/32

(54) **Assemblage étanche bord à bord de deux éléments de construction en particulier pour réservoir de gaz sous pression**
Kante zur Kante Dichtverbindung von zwei Bauelementen, insbesondere für Gasbehälter
Edge to edge sealed connexion of two components, in particular for pressurised gas container

(30) Priorité: 19.12.1996 FR 9615634
(43) Date de publication de la demande: 24.06.1998
(73) Titulaire: Alstom T & D SA, 75116 Paris (FR)
(72) Inventeur: Joyeux-Bouillon, Bernard, 69640 Saint Julien (FR); Maineult, Jean, 01250 Ceyzeriat (FR); Pluveau, Raymond, Sance, 71000 Macon (FR)
(74) Mandataire: Poulin, Gérard

(56) Documents cités:
- GB-A- 836 584
- GB-A- 1 092 648
- US-A- 2 764 311
- US-A- 5 528 972
- JOHNSON: "mesuring gaps in o-ring seals" NTIS TECH. NOTES, juin 1990, SPRINGFIELD, page 500 XP000149126

## Description

L'invention concerne un assemblage étanche bord à bord de deux éléments de construction, notamment des éléments de construction d'un réservoir destiné à contenir du gaz sous pression comme du SF6, et un assemblage étanche bord à bord d'éléments de construction à l'aide d'un tel joint.

Les réservoirs destinés à contenir du gaz sous pression sont parfois formés par un assemblage de pièces unitaires. L'étanchéité entre ces pièces assemblées bord à bord est assurée par des joints, généralement des joints plats ou en forme de tore, constitués d'une matière déformable, par exemple de l'élastomère.

Les types de joints connus aujourd'hui pour la réalisation d'un réservoir de gaz sous pression nécessitent, pour assurer correctement leur fonction d'étanchéité, à la fois un accostage précis entre les bords des deux éléments de construction à assembler et des surfaces de contact entre le joint et les éléments de construction qui présentent une grande qualité de finition car ces surfaces de contact sont généralement limitées pour diminuer les efforts d'accostage. Ces deux conditions nécessitent d'avoir recours à des procédés de fabrication des éléments de construction et des joints d'étanchéité précis et donc coûteux.

Par ailleurs, l'assemblage étanche de ces éléments de construction à l'aide d'un joint classique pose de nombreux problèmes.

Il est nécessaire en particulier de protéger les surfaces de contact sur les éléments de construction pour éviter les éraflures ou autre altération, y compris et surtout pendant le transport de ces éléments de construction. Pendant l'assemblage, il est parfois nécessaire d'avoir recours à des outillages de montage complexes pour tenir le joint en place pendant la phase d'accostage de deux éléments de construction. Il s'ensuit que le coût de construction d'un réservoir de gaz sous pression à l'aide d'un joint d'étanchéité classique est relativement élevé.

Il est connu du document de brevet GB-A-1092648 un assemblage de deux éléments de construction au moyen d'un joint étanche aux fluides. Chaque bord d'un élément à assembler est pourvu d'une gorge sensiblement en forme de V. Le joint d'étanchéité est formé directement entre les deux gorges en regard, par remplissage d'un matériau de type élastomère qui est ensuite vulcanisé in situ. Ce joint épouse la forme laissée libre au moment du remplissage, et ne ménage aucun espace libre pouvant former un réservoir de gaz au fond d'une gorge. Ce procédé d'assemblage évite les problèmes d'accostage mentionnés ci-dessus, mais s'avère relativement contraignant à réaliser en particulier de par la nécessité d'effectuer une vulcanisation in situ. D'autre part, une fois l'assemblage réalisé, le matériau résilient du joint en contact avec les surfaces des deux gorges n'est pas particulièrement comprimé pour appuyer efficacement contre ces surfaces, ce qui peut donner lieu à des fuites le long de ces surfaces.

Par ailleurs, une fois le réservoir de gaz construit, il est courant de procéder à une vérification de l'étanchéité de l'assemblage des éléments de construction. Cette opération est relativement longue car jusqu'à maintenant, on balaie avec un détecteur, toute la surface développée de chaque joint pour localiser une fuite éventuelle. Si une telle fuite est localisée, la réparation nécessite le démontage du réservoir, la remise en état des éléments de construction ou du joint défectueux et de nouveau un assemblage des éléments de construction du réservoir de gaz.

L'invention a donc pour objet d'apporter une solution à l'ensemble de ces problèmes.
Plus particulièrement, l'invention a pour objet un assemblage qui permet de simplifier les opérations d'assemblage d'éléments de construction d'un réservoir de gaz sous pression, avec des éléments simples à fabriquer sans que cela nécessite une protection spécifique de leurs surfaces de contact de joint. Une telle opération d'assemblage doit être réalisée à l'aide d'un joint d'étanchéité déjà formé avant l'assemblage, et doit permettre d'augmenter très fortement la probabilité que l'assemblage soit étanche au premier montage.

L'invention a encore pour objet un assemblage étanche bord à bord d'éléments de construction qui évite d'avoir recours à un outillage spécifique pour la mise en place du joint entre deux éléments de construction à assembler.

L'invention a encore pour objet un assemblage étanche bord à bord d'éléments de construction qui permette une localisation rapide et précise d'un défaut d'étanchéité et qui offre la possibilité d'une réparation sans démontage de l'assemblage.
A cet effet, l'invention a pour objet un assemblage étanche bord à bord le long d'un axe longitudinal de deux éléments de construction réalisant une séparation étanche entre deux espaces comprenant respectivement deux fluides à des pressions différentes, dans lequel le bord d'assemblage de chaque élément de construction est pourvu d'une gorge ayant une section transversale à l'axe longitudinal en forme d'un V, les deux gorges étant en regard l'une de l'autre, l'assemblage comportant en outre un joint d'étanchéité formé à partir d'un matériau résilient et logé dans ces gorges, caractérisé en ce que ledit joint comprend le long de son axe longitudinal deux parties d'extrémités latérales présentant chacune une section transversale en forme de trapèze dont la plus petite base se présente en vis à vis du fond d'une gorge, et en ce que chacune de ces deux parties d'extrémités latérales possède deux surfaces respectivement prévues pour être en contact avec deux surfaces qui définissent une gorge et est montée enfoncée et pincée dans ladite gorge tout en laissant un espace libre entre le fond de la gorge et le joint, cet espace laissé libre constituant un réservoir d'accumulation de fluide pour le contrôle de l'étanchéité de l'assemblage.

Un exemple de réalisation de l'invention est décrit ci-après en détail.

La figure 1 montre en coupe transversale, un exemple de réalisation d'un joint d'étanchéité selon l'invention.

La figure 2 montre en coupe transversale, le bord d'assemblage d'un élément de construction présentant une gorge à section transversale en forme de V et destinée à recevoir une extrémité latérale du joint de la figure 1.

La figure 3 montre en coupe transversale, le joint de la figure 1 monté entre deux éléments de construction.

La figure 4 montre un autre mode de réalisation du joint et d'une gorge d'un assemblage selon l'invention. La figure 5 illustre un moyen pour contrôler l'étanchéité d'un assemblage selon l'invention.

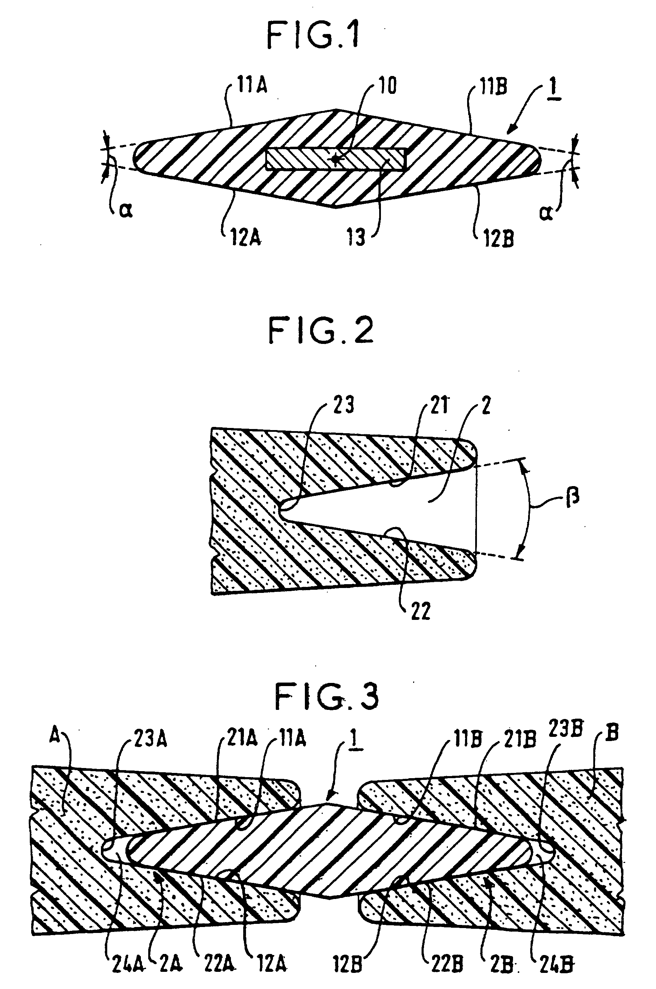

La figure 1 montre donc un exemple de réalisation d'un joint 1 selon l'invention. Ce joint 1 est montré en coupe transversale par rapport à son axe longitudinal 10. Ce joint 1 est destiné tout particulièrement à la réalisation d'un assemblage étanche bord à bord de deux éléments de construction d'un réservoir de gaz sous pression. Dans le cas d'un réservoir de gaz sous pression, le joint 1 est généralement un joint annulaire en matière élastomère pris en sandwich entre deux demi coquilles constituant deux éléments de construction, la forme finale du réservoir de gaz sous pression étant généralement cylindrique. Par la suite, on considère le cas d'un joint pour un tel réservoir, ce qui n'est qu'un exemple de réalisation du joint selon l'invention.

Sur la figure 1, on voit que la section transversale de ce joint 1 a essentiellement la forme de deux trapèzes relativement identiques accolés par leur plus grande base. Ce joint présente des surfaces annulaires 11A et 12A et des surfaces annulaires 11B et 12B obliques par rapport au plan horizontal et qui font entre elles un angle α compris entre 5° et 40°, les surfaces 11A et 12A définissant une extrémité latérale du joint à section transversale en forme de trapèze, les surfaces 11 B et 12B définissant l'autre extrémité latérale du joint 1 à section transversale en forme de trapèze. Ces surfaces 11A,12A,11B,12B qui sont des surfaces destinées à réaliser une fonction d'étanchéité doivent bien entendu être exemptes de traces de moulage, points d'éjection ou d'injection de matière élastomère.

La structure du joint 1 est avantageusement rigidifiée par une âme 13 en un matériau rigide, par exemple une bande métallique ou en matière plastique s'étendant à l'intérieur du joint le long de son axe longitudinal 10. Cette âme 13 contribue à la bonne tenue en pression du joint et à sa mise en place entre deux éléments de construction comme illustré sur la figure 3.

Sur la figure 2, on a représenté en coupe transversale le bord d'assemblage d'un élément de construction. Ce bord est pourvu d'une gorge 2 dont la section transversale a la forme d'un V. Cette gorge est destinée à recevoir une extrémité latérale du joint 1 à section transversale en forme de trapèze. Cette gorge 2 présente des surfaces annulaires 21 et 22 obliques par rapport au plan horizontal qui font entre elles un angle β légèrement supérieur (d'environ 5°) à l'angle α que font les surfaces 11A et 12A ou 11 B et 12B du joint 1. A noter que le fond 23 de la gorge 2 a en section transversale une forme arrondie pour limiter les contraintes mécaniques dans l'élément de construction. La section transversale en forme de V de la gorge 2 contribue à l'auto protection des surfaces 21 et 22 de sorte qu'il n'est pas spécialement utile de les protéger. Une telle forme de gorge peut être obtenue facilement par moulage si les éléments de construction sont en matière plastique ou analogue.

Sur la figure 3, les deux bords respectifs de deux éléments de construction A et B à assembler bord à bord et de façon étanche présentent des gorges 2A et 2B identiques et disposées face à face. Sur cette figure, on voit que les deux extrémités latérales du joint 1 sont enfoncées respectivement dans les deux gorges 2A et 2B de telle sorte que les surfaces 11A et 12A du joint sont en contact respectivement avec les surfaces 21A -et 22A de la gorge 2A et les surfaces 11 B et 12B du joint sont en contact respectivement avec les surfaces 21 B et 22B de la gorge 2B. L'étanchéité est réalisée simplement par pincement des extrémités latérales du joint 1 entre les surfaces 21A et 22A de la gorge 2A et les surfaces 21B,22B de la gorge 2B du fait que l'angle β des gorges 2A et 2B est supérieur à l'angle α du joint. La faible différence entre les valeurs des angles α et β permet d'assurer l'étanchéité même lorsque la distance entre les éléments A et B varie d'une manière importante. En particulier, il n'est pas nécessaire que les éléments A et B soient en contact pour assurer l'étanchéité.

Pour le montage du joint 1 entre les deux éléments de construction A et B, il suffit de mettre d'abord une extrémité latérale du joint 1 en place dans la gorge d'un des deux éléments, par exemple dans la gorge 2A de l'élément A. Le joint 1 reste en place dans cette gorge si cette extrémité latérale est enfoncée dans la gorge 2A avec un léger serrage. Ensuite, on place le second élément de construction B bord à bord avec le premier élément de construction A de sorte que l'autre extrémité latérale du joint 1 est enfoncée dans la gorge 2B de l'élément B. La mise en place du second élément de construction est aisée quelque soit l'orientation du plan de pose. Les deux éléments de construction A et B sont ensuite maintenus bord à bord par des brides non représentées de sorte que le joint 1 est comprimé entre les deux gorges 2A et 2B.

Les surfaces de contact entre le joint et les gorges peuvent être relativement larges pour augmenter la probabilité d'une étanchéité correcte. Le serrage du joint 1 dans les gorges s'effectue sur ces surfaces de contact. L'effort d'accostage des deux éléments de construction correspond donc à un effort de glissement et de pincement du joint dans les gorges et il est très faible.

Sur la figure 3, on voit que chaque gorge 2A et 2B et le joint 1 sont agencés de telle manière qu'un espace 24A et 24B est laissé libre entre le fond 23A de la gorge 2A, respectivement 23B de la gorge 2B, et l'extrémité latérale correspondante du joint 1. Cet espace laissé libre définit une sorte de réservoir qui sert au contrôle de l'étanchéité de l'assemblage comme décrit ci-après.

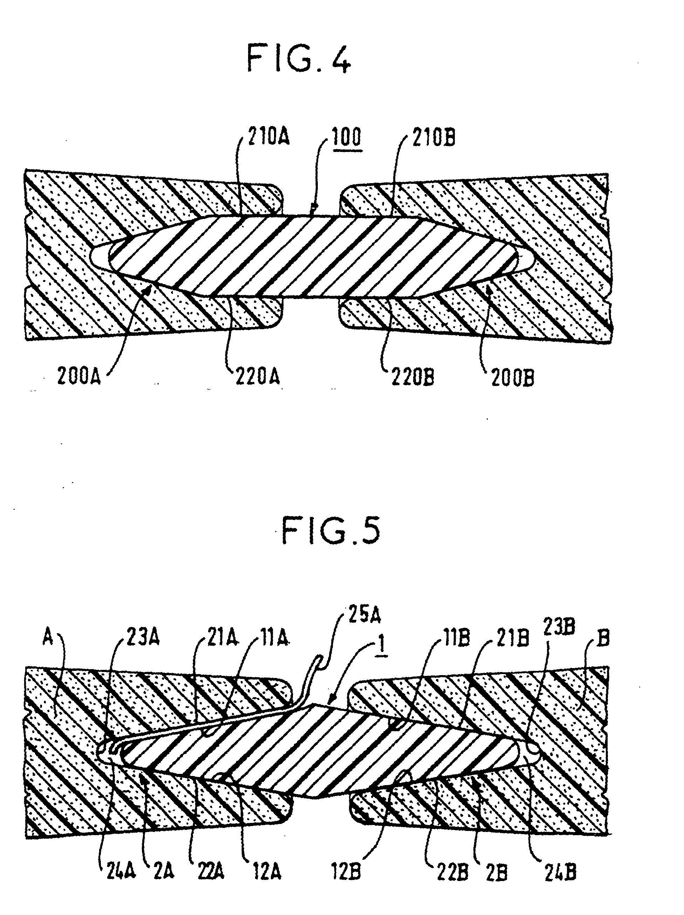

La figure 4 montre en coupe transversale, une variante de réalisation du joint selon l'invention. Dans cette variante, la section transversale du joint 100 est trapézoïdale aux extrémités latérales-et sensiblement rectangulaire dans la zone centrale tandis que les gorges 200A et 200B des éléments de construction à section en V comportent des parties de surfaces 210A et 220A, respectivement 210B et 2208 sensiblement parallèles au niveau de l'ouverture du V. Cette variante permet de libérer de la place entre les deux gorges pour l'expansion de la matière du joint lors de la phase de montage et d'accostage des deux éléments de construction.

Figure 5, pour contrôler l'étanchéité de l'assemblage bord à bord de deux éléments de construction A et B d'un réservoir de gaz sous pression, on insère au moment de la mise en place du joint 1 dans la gorge 2A de l'élément A, au moins un fil 25A entre la surface 11A du joint et la surface 21A de la gorge 2A. Comme visible sur la figure 5, le fil 25A (ou un tube capillaire) a une extrémité qui plonge dans l'espace laissé libre 24A. L'autre extrémité du fil 25A sort du côté de joint 1 qui sera situé à l'extérieur du réservoir de gaz sous pression. Au moins un autre fil (non représenté) identique au fil 25A est placé entre la surface 11B du joint et la surface 21 B de la gorge 2B au moment où l'élément B est assemblé avec l'élément A. Cet autre fil a une extrémité qui plonge dans l'espace 24B laissé libre, son autre extrémité étant située à l'extérieur du réservoir de gaz sous pression.

Le réservoir est ensuite rempli d'un gaz traceur mis sous pression comme du SF6. Si la surface 12A du joint (disposée du côté du volume intérieur du réservoir) n'est pas en contact étanche avec la surface 22A de la gorge 2A, l'espace laissé libre 24A se remplit du gaz traceur et ce gaz s'échappe vers l'extérieur du réservoir le long d'une ligne de fuite créée artificiellement par le fil 25A. Cette fuite peut alors être détectée à l'aide d'un appareil adapté placé en face de l'extrémité du fil 25A située à l'extérieur du réservoir. Si un tel défaut d'étanchéité est détecté, il peut être réparé, sans démontage du réservoir, simplement en retirant le fil 25A par traction vers l'extérieur du réservoir, la ligne de fuite devant normalement se refermer de façon étanche par expansion de la matière élastomère du joint. Le même processus peut être appliqué pour contrôler l'étanchéité de l'assemblage au niveau de l'autre extrémité latérale du joint.

## Revendications

1. Assemblage étanche bord à bord le long d'un axe longitudinal (10) de deux éléments de construction (A, B) réalisant une séparation étanche entre deux espaces comprenant respectivement deux fluides à des pressions différentes, dans lequel le bord d'assemblage de chaque élément de construction est pourvu d'une gorge (2A, 2B) ayant une section transversale à l'axe longitudinal en forme d'un V, les deux gorges (2A, 2B) étant en regard l'une de l'autre, l'assemblage comportant en outre un joint (1) d'étanchéité formé à partir d'un matériau résilient et logé dans ces gorges, **caractérisé en ce que** ledit joint (1) comprend le long de son axe longitudinal deux parties d'extrémités latérales présentant chacune une section transversale en forme de trapèze dont la plus petite base se présente en vis à vis du fond d'une gorge (2A, 2B), et **en ce que** chacune de ces deux parties d'extrémités latérales possède deux surfaces (11A, 12A; 11B, 12B) respectivement prévues pour être en contact avec deux surfaces (21A, 22A ; 21B, 22B) qui définissent une gorge (2A, 2B) et est montée enfoncée et pincée dans ladite gorge (2A, 2B) tout en laissant un espace libre (24A, 24B) entre le fond (23A, 23B) de la gorge et ledit joint, cet espace laissé libre constituant un réservoir d'accumulation de fluide pour le contrôle de l'étanchéité de l'assemblage.

2. L'assemblage selon la revendication 1, comportant un fil (25A) inséré entre une partie d'extrémité latérale du joint (1) et la gorge (2A) dans laquelle est enfoncée cette partie, ce fil ayant une extrémité qui plonge dans l'espace (24A) laissé libre entre le fond (23A) de la gorge et ledit joint et ayant une autre extrémité qui est située dans celui des deux espaces de fluide dont la pression est la moins élevée, afin de créer artificiellement une ligne de fuite vers cet espace depuis ledit espace (24A) laissé libre pour la détection d'un éventuel défaut d'étanchéité de l'assemblage.

3. L'assemblage selon l'une des revendications 1 et 2, dans lequel le joint (1) est rigidifié par une âme rigide (13) s'étendant à l'intérieur du joint le long de son axe longitudinal. .

4. L'assemblage selon l'une des revendications 1 à 3, dans lequel les deux surfaces (11A, 12A ; 11 B, 12B) d'une partie d'extrémité latérale du joint (1) font entre elles un angle (α) légèrement inférieur à un angle (β) que font entre elles les deux surfaces (21A, 22A ; 21B, 22B) à section transversale en V de la gorge correspondante.

## Patentansprüche

1. Dichter Kante-an-Kante-Zusammenbau entlang einer Längsachse (10) zweier Konstruktionselemente (A, B), der eine dichte Trennung zwischen zwei Räumen schafft, die zwei jeweilige Fluide bei verschiedenen Drücken enthalten, wobei die Zusammenbaukante jedes Konstruktionselements mit einer Auskehlung (2A, 2B) versehen ist, welche einen V-förmigen Querschnitt quer zur Längsachse aufweist, wobei die zwei Auskehlungen (2A, 2B) einander gegenüber liegen, wobei der Zusammenbau femer eine Dichtung (1) umfasst, die ausgehend von einem elastischen Material hergestellt und in diesen Auskehlungen aufgenommen ist, **dadurch gekennzeichnet, dass** die Dichtung (1) entlang ihrer Längsachse zwei seitliche Endbereiche aufweist, die jeweils einen Querschnitt in Form eines Trapez haben, dessen kleinere Basis dem Boden einer Auskehlung (2A, 2B) gegenüber liegt, und dass jeder dieser zwei seitlichen Endbereiche zwei Oberflächen besitzt (11A, 12A; 11B, 12B), die jeweils dazu vorgesehen sind, in Kontakt mit zwei Oberflächen (21A, 22A; 21 B, 22B) zu sein, die eine Auskehlung (2A, 2B) definieren, und in die Auskehlung (2A, 2B) eingepresst und festgeklemmt montiert ist, wobei ein Freiraum (24A, 24B) zwischen dem Boden (23A, 23B) der Auskehlung und der Dichtung verbleibt, wobei dieser freigelassene Raum ein Fluidsammelreservoir für die Kontrolle der Dichtigkeit des Zusammenbaus bildet.

2. Zusammenbau nach Anspruch 1, umfassend einen Draht (25A), der zwischen einen seitlichen Endbereich der Dichtung (1) und die Auskehlung (2A) eingesetzt ist, in welche dieser Bereich hineingepresst ist, wobei dieser Draht ein Ende aufweist, welches in den zwischen dem Boden (23A) der Auskehlung und der Dichtung freigelassenen Raum (24A) eintaucht und ein anderes Ende aufweist, welches in demjenigen der zwei Räume mit dem Fluid mit dem niedrigeren Druck liegt, um künstlich eine Leckleitung vom freigelassenen Raum (24A) zu diesem Raum hin für die Erfassung eines eventuellen Dichtigkeitsfehlers des Zusammenbaus zu erzeugen.

3. Zusammenbau nach einem der Ansprüche 1 und 2, bei dem die Dichtung (1) durch eine starre Seele (13) verstärkt ist, die sich innerhalb der Dichtung entlang ihrer Längsachse erstreckt.

4. Zusammenbau nach einem der Ansprüche 1 bis 3, bei dem die zwei Oberflächen (11A, 12A; 11B, 12B) eines seitlichen Endbereichs der Dichtung (1) miteinander einen Winkel (α) bilden, der geringfügig kleiner als ein Winkel (β) ist, den die zwei Oberflächen (21A, 22A; 21B, 22B) mit V-Querschnitt der entsprechenden Auskehlung bilden.

## Claims

1. Sealed edge-to-edge assembly, along a longitudinal axis (10), of two structural elements (A, B), producing a sealed separation between two spaces comprising two fluids at different pressures, respectively, in which assembly the assembly edge of each structural element is provided with a groove (2A, 2B) having a V-shaped cross section transverse to the longitudinal axis, the two grooves (2A, 2B) facing each other, the assembly additionally comprising a seal (1) formed from a resilient material and housed in these grooves, **characterized in that** the said seal (1) comprises, along its longitudinal axis, two lateral end parts each having a trapezoidal cross section, the smaller base of which trapezium is presented opposite the end wall of a groove (2A, 2B), and **in that** each of these two lateral end parts has two surfaces (11A, 12A; 11B, 12B) respectively designed to be in contact with two surfaces (21A, 22A; 21B, 22B) that define a groove (2A, 2B) and is fitted deep and tightly in the said groove (2A, 2B) while leaving a free space (24A, 24B) between the end wall (23A, 23B) of the groove and the said seal, this space that has been left free constituting a fluid-accumulation reservoir for monitoring the leaktightness of the assembly.

2. Assembly according to Claim 1, comprising a wire (25A) inserted between a lateral end part of the seal (1) and the groove (2A) into which this part has been pushed, this wire having an end that thrusts into the space (21A) that has been left free between the end wall (23A) of the groove and the said seal and having another end that is situated in whichever of the two fluid spaces has the less high pressure, in order to artificially create a line of escape towards this space from the said space (24A) that has been left free for detecting any defect in the leaktightness of the assembly.

3. Assembly according to either of Claims 1 and 2, in which the seal (1) is stiffened by a rigid core (13) extending inside the seal along its longitudinal axis.

4. Assembly according to one of Claims 1 to 3, in which the two surfaces (11A, 12A; 11B, 12B) of a lateral end part of the seal (1) make between them an angle (α) that is slightly smaller than an angle (β) than the two surfaces (21A, 22A; 21B, 22B) with V-shaped cross section of the corresponding groove make between them.
